# EUROPÄISCHE PATENTSCHRIFT

(11) **EP 0 556 661 B1**
(45) Veröffentlichungstag und Bekanntmachung des Hinweises auf die Patenterteilung: **15.01.1997**
(21) Anmeldenummer: 93101766.9
(22) Anmeldetag: 05.02.1993
(51) Int. Cl.: B66F 11/04

(54) **Mobiles Arbeitsgerät, insbesondere Hubarbeitsbühne**
Mobile working apparatus, in particular working platform
Engin mobile de travail, en particulier plate-forme de travail

(30) Priorität: 21.02.1992 DE 9202227 U
(43) Veröffentlichungstag der Anmeldung: 25.08.1993
(73) Patentinhaber: TEUPEN MASCHINENBAU GmbH, D-48599 Gronau (DE)
(72) Erfinder: Thihatmer, Alfons, W-4442 Salzbergen (DE); Leusder, Hermann, W-4434 Ochtrup (DE); Awater, Klaus, W-4443 Quendorf (DE)
(74) Vertreter: Hoffmeister, Helmut, Dr. Dipl.-Phys.

(56) Entgegenhaltungen:
- DE-A- 3 035 654
- US-A- 2 864 625

## Beschreibung

Die Erfindung betrifft ein mobiles Arbeitsgerät, insbesondere Hubarbeitsbühne, bestehend aus
- einem Fahrgestell mit
   . zu beiden Seiten angebrachten Rädern,
   . einer Deichsel, die im Stand auch als Stütze dient,
   . einer der Deichsel gegenüberliegenden ersten Stütze und
   . zwei zur Deichsel und zur ersten Stütze abgewinkelt angeordneten und jeweils in einem Stützendrehpunkt mit dem Fahrgestell verbundenen zweiten und dritten Stütze und
- einem Oberbau , der z.B. mit einem Teleskopmast, der mit Arbeitsgerätschaften in Form von Krangeschirr, Transportschlitten, einem Arbeitskorb oder dgl. bestückbar oder bestückt ist.

Auf einem Unterbau, der mit Rädern oder Ketten ausgerüstet ist, befindet sich ein Oberbau, der Arbeitsgerätschaften in Form von Baggerschaufeln, Masten mit einem Kranhaken, einem Transportschlitten oder einem Arbeitskorb trägt. Damit der Unterbau die bei der Arbeit entstehenden hohen Belastungsmomente aufnehmen kann, enthält der Unterbau ein Stützsystem, das ihn fest am Erdboden abstützt.

Es ist ein mobiles Arbeitsgerät der eingangs genannten Art bekannt (EP-PS 223 761), bei dem ein Fahrgestell vorhanden ist, bei dem die Deichsel im Stand auch als Stütze dient. Nachteilig bei dieser Konstruktion ist, daß sich Verstellungen der Stützelemente nur aufwendig durchführen und überwachen lassen.

Aus der US-A-2,864,625 ist ein Lastkraftwagen mit einem Kranaufbau bekannt, der lediglich zur Erhöhung der Hubkraft seines Auslegers mit einem verschwenkbaren Lastarm mit einem zusätzlichen Rad versehen ist. Die Verschwenkung des Lastarmes von der angwinkelten Transport- in die Arbeitsstellung erfolgt mit einem Hydraulikzylinder als Feststellvorrichtung.

Letztendlich ist aus der DE-A-30 35 654 eine hydraulisch betätigte Knickdeichsel an einem landwirtschaftlichen Ladewagen bekannt. Hierzu ist zwischen der Deichsel und einem vorderen Querholm eines Fahrzeugrahmens ein Hydraulikzylinder angeordnet. Allerdings wird die Deichsel nur dazu benötigt, um den Ladewagen in einem Flachsilo in eine solche Stellung zu bringen, damit seine Entladung möglich ist.

Der Erfindung liegt die Aufgabe zugrunde, die vorstehend genannten Nachteile bei einem mobilen Arbeitsgerät der eingangs genannten Art zu beseitigen und ein mobiles Arbeitsgerät, insbesondere Hubarbeitsbühne zu schaffen, das einfach und sicher in der Wirkungsweise ist und bei der automatische und manuelle Feststellungen der stabilisierenden Teile in einfacher Weise durchführbar sind.

Diese Aufgabe wird erfindungsgemäß durch die Merkmale des Anspruches 1 gelöst.

Die mit der Erfindung erzielten Vorteile bestehen insbesondere darin, daß als vierte Stütze die höhenverstellbare Deichsel bei der Stabilisierung des Stützsystems mitwirkt. Nach dem Absenken der ersten Stütze und dem Abklappen der seitlichen zweiten und dritten Stütze wird die Deichsel gemeinsam mit diesen so höhenverstellt,d aß das Gerät genau waagerecht steht.

Die einzeln steuerbaren Verstellvorrichtungen ermöglichen es, daß die Deichsel und die Stützen in die gewünschten Stellungen gebracht werden können.

Dadurch, daß sich zwischen einer Deichsel und dem Fahrgestell mit der Verstellvorrichtung gleichzeitig die ansteuerbare Feststelleinrichtung befindet, mit der die Deichsel verriegel- und entriegelbar ist, ist es möglich, alle Teile in einer Transport- und in einer Arbeitsstellung festzulegen, ohne daß dazu zusätzliche manuelle Fixierungen und Sicherungselemente benötigt werden.

Die Deichsel kann damit an unterschiedliche Abstütz- und Zugverhältnissen einfach und sicher angepaßt werden. Es ist möglich, die Höhenverstellung so vorzunehmen, daß sie in jeder Stellung automatisch verriegel- und entriegelbar ist.

Vorteilhaft ist es darüberhinaus, an der Deichsel eine Konsole anzuordnen, die an der Deichsel unterschiedliche Anhängerkupplungen, z.B. für PKW oder für LKW, aufnimmt. Sie ist mit nur wenigen Handgriffen zu wechseln, ohne daß die gesamte Deichselkonstruktion verändert werden muß.

Vorteilhaft ist es, daß im Stützsystem die erste Stütze der Deichsel gegenüberliegend höhenvertellbar angeordnet und daß die zweite und die dritte Stütze abgewinkelt zur Deichselachse am Unterbau angelenkt ist. Diese Ausbildung des Stützsystems ermöglicht nicht nur eine gleichmäßigere Verteilung der Last, sondern auch eine platzsparende Aufstellung des Arbeitsgerätes. Durch die Deichsel kann auch die ihr gegenüberliegende erste Stütze relativ lang und damit die zweite und die dritte kurz ausgebildet werden. Trotz eines geringen seitlichen Platzbedarfes ist ein solcher Arbeitsradius gesichert, der eine hohe Standsicherheit des Arbeitsgerätes ermöglicht. Nach dem Gebrauch sind die Deichsel und die erste Stütze hochzufahren und die zweite und die dritte Stütze nur hochzuklappen. Durch diese Geometrie wird der Vorteil des geringen seitlichen Platzbedarfes auch beim Transportieren des Arbeitsgerätes beibehalten.

In vorteilhafter Art und Weise ist die erste Stütze an dem Oberbau festlegbar. Dadurch wird vor allem ein seitliches Ausschwingen des langen Oberbaus beim Transportieren unterbunden.

Vorteilhaft ist es, daß der Mast, die Deichsel und die Stützen aus mehrteiligen Hohlprofilen bestehen. Dadurch wird neben einer hohen Materialeinsparung eine hohe Festigkeit erzielt.

Vorteilhaft ist es, daß an der Deichsel und an den Stützen jeweils ein Auflageteller angeordnet ist. Dieser Auflageteller ist drehbar mit Befestigungslaschen an der Deichsel und an den Stützen befestigt. Dadurch wird insbesondere die Standsicherheit des Arbeitsgerätes gewährleistet.

Vorteilhaft ist ferner, daß die erste Stütze in einer angeschwenkten Stellung mit einer Festlegeinrichtung (Befestigungslasche) mit dem eingefahrenen und umgelegten Mast verriegelbar ist. Dadurch, daß die Befestigungslasche des ersten Stützarmes in eine Ausnehmung eingreift, die zwischen den Profilen in einen Korbarm endenden Teleskopmast angeordnet ist, bildet sich ein Festlegeelement, das das Ober- und das Unterteil zu einer Transporteinheit werden läßt.

Vorteilhaft ist es, die Deichsel, die Stützen und den Teleskopmast sowie ein daran befestigten als Arbeitsgerätschaft ausgebildeten Arbeitskorb in Leichtbauweise auszuführen. Ein so gefertigtes Arbeitsgerät zeichnet sich bei einem geringen Transport- und Eigengewicht durch gleichbleibende Gebrauchs- und Einsatzeigenschaften aus.

Die Erfindung wird nachstehend an einem Ausführungsbeispiel näher erläutert. Es zeigen:
- Figur 1: ein mobiles Arbeitsgerät in einer Seitenansicht,
- Figur 2: ein mobiles Arbeitsgerät in einer funktionellen schematischen Draufsicht,
- Figur 3: eine Stütze in an- und ausgelenkter Stellung und
- Figur 4: eine Deichsel in einer Seiten- und in einer Draufsicht.

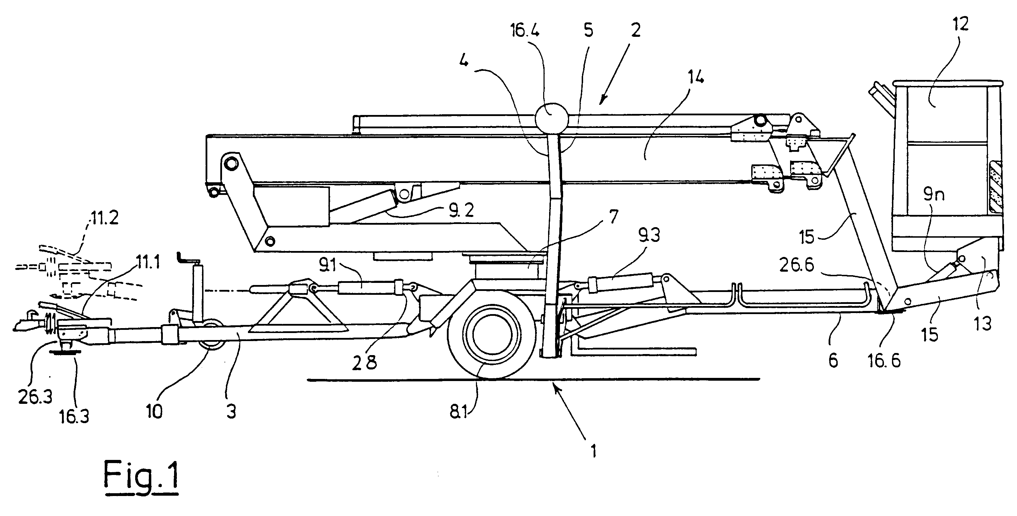

Ein als Hubarbeitsbühne ausgebildetes mobiles Arbeitsgerät ist in Figur 1 im Transportzustand dargestellt. Auf einem Unterteil in Form eines Fahrgestells 1 ruht ein als Oberteil ausgebildeter Drehturm 2. Der Drehturm 2 besteht aus einem mehrteiligen Teleskopmast 14, der vorn in einen Korbarm 15 endet, der an einem Korbhalter 13 einen Korb 12 trägt. Der Korb 12 ist über einen Hydraulikzylinder 9.n lageveränderbar. Der Drehturm 2 ist mit einem Drehkranz 7 am Fahrgestell 1 verbunden. Am Fahrgestell 1 sind zu beiden Seiten Räder 8.1, 8.2 angebracht, wodurch die Hubarbeitsbühne wie ein Anhänger gezogen werden kann. Zum Ziehen enthält dieses Fahrgestell 1 eine Deichsel 3.

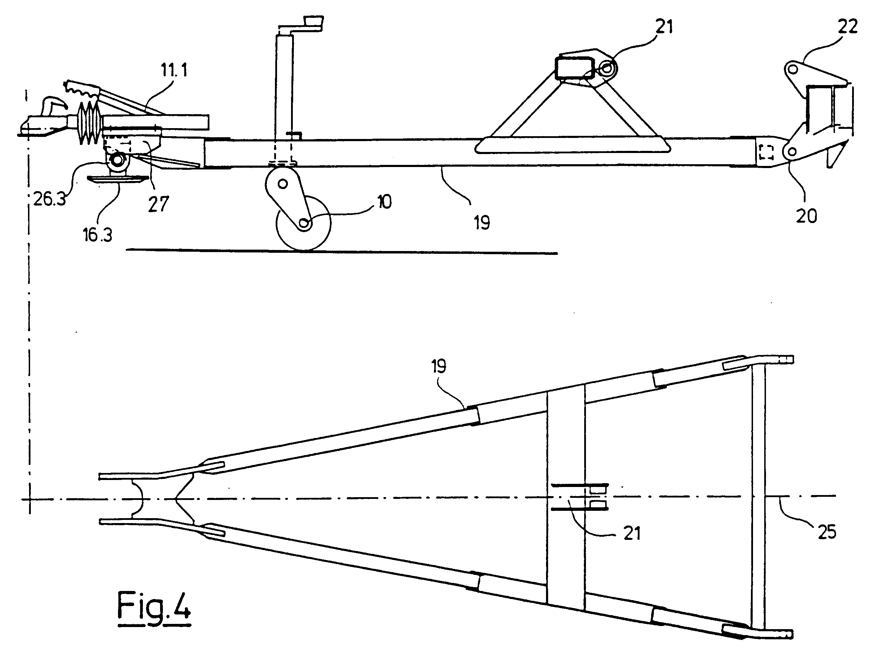

Erfindungswesentlich ist, daß die Deichsel 3 eine Stütze im Stützsystem 24 und darüber hinaus höhenverstellbar ist. Wie im Detail hierzu Figur 4 zeigt, ist es durch eine verstellbare Konsole 27 möglich, den veränderten Winkel bei der Höhenverstellung auszugleichen. Dadurch ist die waagerechte Montage einer Anhängerkupplung-LKW 11.2 im Austausch mit einer Anhängerkupplung für PKW 11.2 möglich.

Allerdings braucht dadurch nicht die gesamte Deichsel 3 verändert werden. Damit die Deichsel 3 als Stütze höhenverstellbar ist, ist auf der Deichsel 3 im zweiten Drittel von der Anhängerkupplung 11.1 gesehen ein Aufnahmeelement 21 und unmittelbar am Deichseldrehpunkt 20 auf dem Fahrgestell 1 ein weiteres Aufnahmeelement 22 befestigt. Zwischen beiden Aufnahmeelementen 21, 22 befindet sich ein Hydraulikzylinder 9.1 und eine Feststellungseinrichtung 28, die z.B. durch ein elektrisch entsperrbares Sitzventil realisierbar sein kann. Dabei wird die Höhenverstellung der Deichsel 3 durch die Feststelleinrichtung 28 automatisch entriegelt und nach dem Erreichen gewünschter Höhe automatisch wieder verriegelt. Diese Verriegelung erlaubt es, daß die Deichsel 3 die für den jeweiligen Einsatzfall bestehenden strengen Sicherheitsvorschriften erfüllt. Unter der Anhängerkupplung 11.1, 11.2 ist über eine Befestigungslasche 26.3 ein Auflageteller 16.3 befestigt.

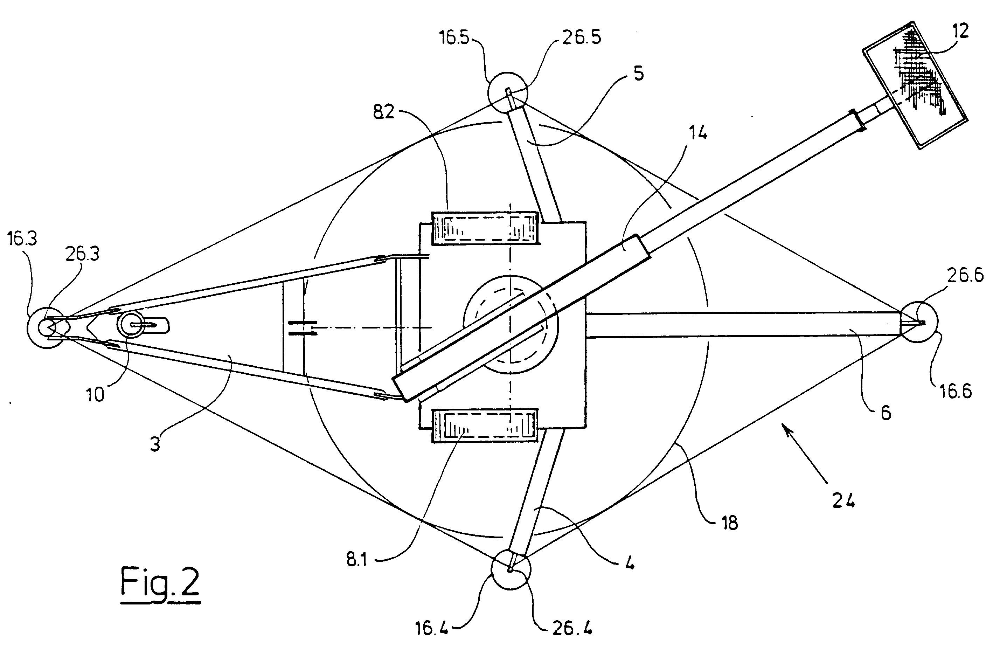

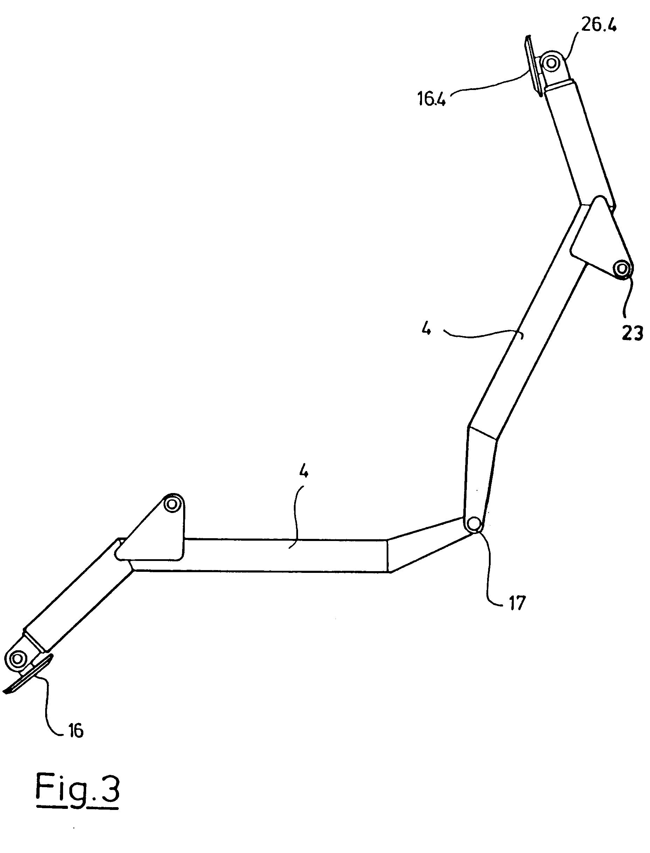

An der der Deichsel 3 gegenüberliegenden Seite des Fahrgestell 1 ist eine Stütze 6 befestigt. Sie hat etwa die gleiche Länge wie die Deichsel 3, besitzt einen an einer Befestigungslasche 16.6 befestigten Auflageteller 26.6 und ist gleichfalls durch einen Hydraulikzylinder 9.3 höhenverstellbar. An den Seiten des Fahrgestell 1, an dem die Räder 8.1, 8.2 befestigt sind, befinden sich Stützen 4 und 5. Diese Stützen 4 und 5 sind, wie die Figur 3 am Beispiel der Stütze 4 besonders deutlich Zeigt, über einen Stützendrehpunkt 17 bis an den Drehturm 2 heran- und in Anpassung an die Deichsel 3 und die Stütze 6 bis auf die Standfläche herabklappbar. Ermöglicht wird das durch einen nicht dargestellten Hydraulikzylinder, der zwischen einem Aufnahmeelement 23 und dem Fahrgestell 1 eingesetzt ist. Damit die Stützen 4 und 5 gut aufliegen, trägt jede einen an einer Befestigungslasche 26.4, 26.5 angebrachten Auflageteller 16.4, 16.5. Damit die Stützen 4 und 5 gut am Fahrgestell 1 und am Drehturm 2 anliegen und beim Abstützen nur mit den Auflageteller auf dem Untergrund aufsetzen, weisen diese eine aus drei Teilen bestehende runenförmige l-Gestalt aus. Es entsteht eine durch einen Arbeitskreis 18 definierte Stützgeometrie. Aus Platz- und Kraftübertragungsgründen sind die Stützen 4 und 5, wie insbesondere Figur 2 zeigt, vom Mittelpunkt nicht genau rechtwinklig zur Deichselachse 25 gestellt. Dadurch können die Stützen 4 und 5 an den Rädern 8.1, 8.2 vorbei herabgeklappt werden.

Mit einem Fahrzeug, z.B. einem PKW oder LKW, wird die Hubarbeitsbühne zu einem Arbeitsort gezogen. Einsetzbar ist sie für folgende Arbeiten:
- Montage und Wartung der Straßen-, Schienen- und Neon-Reklamebeleuchtung, Verkehrssignalanlagen,
- Montagearbeiten an Leitungsmasten, Antennen usw.,
- Prüfung und Instandsetzung von Brücken,
- Malerarbeiten,
- Glas- und Gebäudereinigung, Fassadenrenovierung,
- Wartungsarbeiten an und in Hallen, Toren, Decken,
- Wartungsarbeiten auf Werften,
- Wartungsarbeiten an Flugzeugen, Flugzeugenteisung,
- Baumbeschnitt, Baumchirurgie,
- Wartung von Großmaschinen und Förderbandanlagen usw.,
- Reinigungsarbeiten allgemein, z. B. einer Autobahn-Beschilderung,
- Montagearbeiten in Werkhallen über Maschinen und Hindernissen,
- Einsatz im Hochregallager,
- Fahrleitung, Signal- und Beleuchtungsanlagen der Eisenbahn,
- Film- und Fernsehaufnahmen, z. B. als erhöhter Standort für die Kamera.

Am Einsatzort werden zuerst die seitlichen Stützen 4 und 5 abgeklappt und danach die Deichsel und die ihr gegenüberliegende Stütze abgesenkt. Jede Stütze 4, 5 und 6 und die Deichsel 3 werden so höhenverstellt, daß das Gerät genau waagerecht steht. Hierzu ist auf dem Fahrgestell 1 eine Wasserwaage eingebaut. Danach wird der Teleskoparm 14 mit dem Arbeitskorb 12 ausgefahren. Der Teleskoparm 14 besteht aus drei Aluminiumprofilen, die rollengelagert sind und mittels Hydraulikzylindern mit dazugehörigen Ketten gleichmäßig ein- bzw. ausgefahren werden können. Die Ketten (nicht dargestellt) werden überwacht durch Sicherheitsschalter. Durch die hydrostatische Parallelführung der Hydraulikzylinder 9.n am Korbhalter und Parallelführungszylinder am Hubarmhalter wird der Arbeitskorb 12 zwangsweise immer waagerecht gehalten. Der dreifach ausgefahrene Teleskopmast 14 dreht sich auf dem Drehkranz 7 auf dem Fahrgestell 1. Der Drehbereich liegt bei 450°. Alle Bewegungen erfolgen hydraulisch, wobei der Druck von einer Pumpe erzeugt wird, die durch einen 220 V-Wechselstrommotor angetrieben wird. Im Arbeitskorb 12 befindet sich eine Arbeitssteuerung. Dadurch ist der Teleskopmast 14 drehbar. Wesentlich ist auch, daß die Hubarbeitsbühne durch die Ausbildung des Stützsystems 24 bei einem Gefälle bis zu ca. 14 % benutzt werden kann. Dabei sollte die Hubarbeitsbühne so eingestellt werden, daß sie bergaufwärts arbeitet, während das Fahrzeug bergabwärts geparkt ist.

Sind die Arbeiten beendet, wird zuerst der Teleskopmast 14 über die Stütze 6 geschwenkt und danach mit dem Arbeitskorb 12 eingefahren. Danach werden die Stützen 4, 5 und 6 sowie die Deichsel 3 angehoben. Die Stützen 4 und 5 werden danach bis an den Teleskoparm 14 angeschwenkt. Sämtliche Hydraulikzylinder 9.2 ... 9.n werden bis in ihre Endstellung gefahren. Dabei drückt sich die Stütze 6 mit der Befestigungslasche 26.6 und dem Auflageteller 16.6 fest in eine dafür vorgesehene Ausnehmung des Korbarmes 15 ein. Dadurch ist gewährleistet, daß der Teleskopmast 14 beim Transport des Hubarbeitsgerätes keine störenden Pendelbewegungen ausführt. Darüber hinaus sorgen die Hydraulikzylinder 9.2 ... 9.n für ein sicheres Halten aller Teile.

Beim Anheben der Deichsel 3 stützt das Deichsellaufrad 10 das gesamte Hubarbeitsgerät ab. Von Vorteil ist es dabei, daß das Deichsellaufrad 10 seitlich an der Deichsel 3 befestigt ist und mit einer Kurbel vor dem Transport nach oben bewegt werden kann.

### Bezugszeichenliste

- 1: Unterbau, Fahrgestell
- 2: Oberbau, Drehturm
- 3: Deichsel
- 4, 5, 6: Stütze
- 7: Drehkranz
- 8.1, 8.2: Rad
- 9., ... 9.n: Hydraulikzylinder
- 10: Deichsellaufrad
- 11.1: Anhängerkupplung-Pkw
- 11.2: Anhängerkupplung-Lkw
- 12: Arbeitskorb
- 13: Korbhalter
- 14: Teleskopmast
- 15: Korbarm
- 16.3, 16.4,:
- 16.5, 16.6: Auflageteller
- 17: Stützendrehpunkt
- 18: Arbeitsradius
- 19: Deichselgabel
- 20: Deichseldrehpunkt
- 21, 22, 23: Aufnahmeelement
- 24: Stützsystem
- 25: Deichselachse
- 26.3, 26.4,:
- 26.5, 26.6: Befestigungslasche
- 27: Konsole
- 28: Feststelleinrichtung

## Patentansprüche

1. Mobiles Arbeitsgerät, insbesondere Hubarbeitsbühne, bestehend aus
- einem Fahrgestell (1) mit
. zu beiden Seiten angebrachten Rädern (8.1, 8.2),
. einer Deichsel (3), die im Stand auch als Stütze dient,
. einer der Deichsel (3) gegenüberliegenden ersten Stütze (6)
und
. zwei zur Deichsel (3) und zur ersten Stütze abgewinkelt angeordneten und jeweils in einem Stützendrehpunkt (17) mit dem Fahrgestell (1) verbundenen zweiten und dritten Stütze (4, 5)
und
- einem Oberbau (2), ausgestattet z.B. mit einem Teleskopmast (14), der mit Arbeitsgerätschaften in Form von Krangeschirr, Transportschlitten, einem Arbeitskorb (12) oder dgl. bestückbar oder bestückt ist,
dadurch gekennzeichnet,
- daß die Deichsel (3) in einem Deichseldrehpunkt (20)und die erste Stütze (6) gelenkig mit dem Fahrgestell (1) verbunden und mit der zweiten und der dritten Stütze 4, 5 höhenverstellbar sind und
- daß zwischen dem Fahrgestell (1) und
. der ersten, zweiten und dritten Stütze (4, 5, 6) jeweils eine ansteuerbare Verstelleinrichtung (9.3)
und zwischen dem Fahrgestell und
. der Deichsel eine weitere ansteuerbare Verstelleinrichtung (9.1), die mit einer Feststelleinrichtung (28) ver- und entriegelbar ist,
angeordnet ist.

2. Arbeitsgerät nach Anspruch 1, dadurch gekennzeichnet, daß die Verstellvorrichtungen Fluidmotoren oder Fluidzylinder, insbesondere Hydraulikzylinder, (9.1;9.2) sind.

3. Arbeitsgerät nach Anspruch 1, dadurch gekennzeichnet, daß an der Deichsel (3) eine Konsole (27) zur Montage unterschiedlicher Anhängerkupplungen, z.B. für PKW (11.1) oder LKW (11.2), angeordnet ist.

4. Arbeitsgerät nach Anspruch 1, dadurch gekennzeichnet, daß die erste Stütze (6) in einer geschwenkten Stellung mit einer Festlegeinrichtung (Befestigungslasche 26.6) mit dem Oberbau (2) verriegelbar ist.

5. Arbeitsgerät nach Anspruch 4, dadurch gekennzeichnet, daß die erste Stütze in eine Ausnehmung eingreift, die zwischen den Profilen des in einem Korbarm (15) endenden eingefahrenen Teleskopmast (14) angeordnet ist.

6. Arbeitsgerät nach wenigstens einem der Ansprüche 1 bis 5, dadurch gekennzeichnet, daß die zweite und die dritte Stütze (4, 5) über einen Stützendrehpunkt (17) bis an den Oberbau (2) heranklappbar ist.

7. Arbeitsgerät nach wenigstens einem der Ansprüche 1 bis 6, dadurch gekennzeichnet, daß die zweite und die dritte Stütze (4, 5) vom Fahrgestell (1) abgewinkelt zur Deichselachse (25) gestellt sind, so daß sie an den Rädern (8.1, 8.2) vorbei herabklappbar sind.

8. Arbeitsgerät nach wenigstens einem der Ansprüche 1 bis 7, dadurch gekennzeichnet, daß an der Deichsel (3) seitlich ein Deichsellaufrad (10) angeordnet ist.

9. Arbeitsgerät nach wenigstens einem der Ansprüche 1 bis 8, dadurch gekennzeichnet, daß die Deichsel (3) und/oder die Stützen (4, 5, 6) aus mehrteiligen Hohlprofilen bestehen.

10. Arbeitsgerät nach wenigstens einem der Ansprüche 1 bis 9, dadurch gekennzeichnet, daß an der Deichsel (3) und an den Stützen (4, 5, 6) über Befestigungs laschen (26.3, 26.4, 26.5, 26.6) jeweils ein Auflageteller (16.3, 16.4., 16.5, 16.6) angeordnet ist.

11. Arbeitsgerät nach wenigstens einem der Ansprüche 1 bis 10, dadurch gekennzeichnet, daß die Deichsel (3), die Stützen (4, 5, 6) und der Teleskopmast (14) sowie ein daran befestigter Arbeitskorb (12) in Leichtbauweise ausgeführt sind.

## Claims

1. A mobile working apparatus, in particular lifting working platform, consisting of
- an undercarriage (1) with
. wheels (8.1, 8.2) attached on both sides,
. a drawbar (3) which when upright also serves as a support,
. a first support (6) located opposite the drawbar (3) and
. two, second and third, supports (4, 5) arranged forming an angle relative to the drawbar (3) and to the first support and each connected in a support pivot (17) to the undercarriage (1), and
- a superstructure (2), equipped e.g. with a telescopic mast (14), which can be or is equipped with working appliances in the form of crane gear, transport slides, a working cage (12) or the like,
characterised in that
- the drawbar (3) in a drawbar pivot (20) and the first support (6) are articulated to the undercarriage (1) and are vertically adjustable with the second and third supports (4, 5), and
- that between the undercarriage (1) and
. the first, second and third supports (4, 5, 6) in each case a controllable adjustment means (9.3) and between the undercarriage and
. the drawbar an additional controllable adjustment means (9.1), which can be locked and unlocked with a locking means (28),
is arranged.

2. A working apparatus according to Claim 1, characterised in that the adjustment means are fluid engines or fluid cylinders, in particular hydraulic cylinders (9.1; 9.2).

3. A working apparatus according to Claim 1, characterised in that a bracket (27) for mounting different couplings for towed vehicles, e.g. for passenger cars (11.1) or lorries (11.2), is provided on the drawbar (3).

4. A working apparatus according to Claim 1, characterised in that the first support (6) can be locked to the superstructure (2) in a pivoted position by a locking means (fixing plate 26.6).

5. A working apparatus according to Claim 4, characterised in that the first support engages in a recess which is located between the profiles of the retracted telescopic mast (14) which ends in a cage arm (15).

6. A working apparatus according to at least one of Claims 1 to 5, characterised in that the second and the third support (4, 5) can be folded up as far as the superstructure (2) by means of a support pivot (17).

7. A working apparatus according to at least one of Claims 1 to 6, characterised in that the second and the third support (4, 5) from the undercarriage (1) are set forming an angle to the drawbar axis (25), so that they can be folded down past the wheels (8.1, 8.2).

8. A working apparatus according to at least one of Claims 1 to 7, characterised in that a drawbar wheel (10) is arranged on the side of the drawbar (3).

9. A working apparatus according to at least one of Claims 1 to 8, characterised in that the drawbar (3) and/or the supports (4, 5, 6) consist of multi-part hollow profiles.

10. A working apparatus according to at least one of Claims 1 to 9, characterised in that in each case a bed plate (16.3, 16.4, 16.5, 16.6) is arranged via fixing plates (26.3, 26.4, 26.5, 26.6) on the drawbar (3) and on the supports (4, 5, 6).

11. A working apparatus according to at least one of Claims 1 to 10, characterised in that the drawbar (3), the supports (4, 5, 6) and the telescopic mast (14) and also a working cage (12) attached thereto are made of a lightweight construction.

## Revendications

1. Engin de travail mobile, en particulier plateforme de travail élévatrice, constitué
- d'un châssis (1) comportant
- des roues (8.1, 8.2) disposées des deux côtés,
- un timon (3) qui sert également d'appui en position debout,
- un premier appui (6) situé à l'opposé du timon (3), et
- un deuxième et un troisième appuis (4, 5) disposés selon un angle par rapport au timon (3) et au premier appui (6) et reliés au châssis (1) au niveau d'un pivot (17), et
- d'une structure supérieure (2), pourvue par exemple d'un mât télescopique (15) qui peut être équipé ou est équipé d'ustensiles de travail sous la forme d'outils de levage, de chariots de transport, d'une cage de travail (12) ou analogues,
caractérisé en ce
- que le timon (3) est relié au niveau d'un pivot (20) au châssis (1) et l'appui (6) est articulé sur ce dernier et le timon (3) et l'appui (6) sont réglables en hauteur avec le deuxième et le troisième appuis 4, 5, et
- qu'il est disposé entre le châssis (1) et
- le premier, le deuxième et le troisième appuis (4, 5, 6), respectivement un dispositif de réglage (9.3) commandable
et entre le châssis et
- le timon (3), un autre dispositif de réglage (9.1) commandable qui peut être verrouillé et déverrouillé par un dispositif de blocage (28).

2. Engin de travail selon la revendication 1, caractérisé en ce que les dispositifs de réglage sont des moteurs fluidiques ou des vérins fluidiques, notamment des vérins hydrauliques (9.1 ; 9.2).

3. Engin de travail selon la revendication 1, caractérisé en ce qu'une console (27), destinée au montage de différents dispositifs d'attelage de remorque, par exemple pour des voitures particulières (11.1) ou des camions (11.2), est disposée sur le timon (3).

4. Engin de travail selon la revendication 1, caractérisé en ce que dans une position pivotée, le premier appui (6) peut être verrouillé avec la structure supérieure (2) par un dispositif de fixation (patte de fixation 26.6).

5. Engin de travail selon la revendication 4, caractérisé en ce que le premier appui s'engage dans un évidement qui est disposé entre les profilés du mât télescopique (14) rentré et se terminant par un bras portecage (15).

6. Engin de travail selon au moins l'une des revendications 1 à 5, caractérisé en ce que le deuxième et le troisième appuis (4, 5) peuvent être repliés jusqu'à la structure supérieure (2) par l'intermédiaire d'un pivot (17) d'appui.

7. Engin de travail selon au moins l'une des revendications 1 à 6, caractérisé en ce que le deuxième et le troisième appuis (4, 5) sont à partir du châssis (1) disposés selon un angle par rapport à l'axe (25) du timon de sorte qu'ils peuvent être repliés devant les roues (8.1, 8.2).

8. Engin de travail selon au moins l'une des revendications 1 à 7, caractérisé en ce qu'une roue (10) de timon est disposée sur le côté du timon (3).

9. Engin de travail selon au moins l'une des revendications 1 à 8, caractérisé en ce que le timon (3) et/ou les appuis (4, 5, 6) sont constitués de profilés creux en plusieurs parties.

10. Engin de travail selon au moins l'une des revendications 1 à 9, caractérisé en ce qu'un disque d'appui (16.3, 16.4, 16.5, 16.6) est disposé respectivement sur le timon (3) et sur les appuis (4, 5, 6) par l'intermédiaire de pattes de fixation (26.3, 26.4, 26.5, 26.6).

11. Engin de travail selon au moins l'une des revendications 1 à 10, caractérisé en ce que le timon (3), les appuis (4, 5, 6) et le mât télescopique (14) ainsi qu'une cage de travail (12) fixée sur celui-ci sont de construction légère.
